# EUROPÄISCHE PATENTSCHRIFT

(11) **EP 0 639 113 B1**
(45) Veröffentlichungstag und Bekanntmachung des Hinweises auf die Patenterteilung: **09.10.1996**
(21) Anmeldenummer: 94909096.3
(22) Anmeldetag: 01.03.1994
(51) Int. Cl.: B01J 39/02, C02F 1/42

(54) **VERFAHREN ZUR UMWELTFREUNDLICHEN VERWERTUNG VON SAUREN ABWÄSSERN**
ENVIRONMENTALLY ACCEPTABLE METHOD OF USING ACID WASTE WATER
PROCEDE PERMETTANT D'UTILISER DES EAUX USEES ACIDES TOUT EN RESPECTANT L'ENVIRONNEMENT

(30) Priorität: 03.03.1993 DE 4306663
(43) Veröffentlichungstag der Anmeldung: 22.02.1995
(73) Patentinhaber: SÜD-CHEMIE AG, D-80333 München (DE)
(72) Erfinder: HÄHN, Reinhard, D-84186 Vilsheim (DE); SCHURZ, Klaus, D-81477 München (DE); BUCKL, Hans, D-85356 Freising (DE); EISENSCHMID, Wolfgang, D-84072 Au Hallertau (DE)
(74) Vertreter: Patentanwälte Dipl.-Ing. R. Splanemann Dr. B. Reitzner Dipl.-Ing. K. Baronetzky
(86) Internationale Anmeldenummer: EP9400593
(87) Internationale Veröffentlichungsnummer: WO9420214

(56) Entgegenhaltungen:
- EP-A- 0 092 108
- EP-A- 0 164 514

## Beschreibung

Die Erfindung betrifft ein Verfahren zur umweltfreundlichen Verwertung von sauren Abwässern, die im wesentlichen Fe^{2+/3+}-, Al³⁺-, Ca²⁺- und Mg²⁺-Ionen enthalten, wobei gleichzeitig ein Sorptionsmittel mit guten Bleicheigenschaften erhalten wird. Das bei der Herstellung anfallende Filtrat ist weitestgehend schwermetallfrei.

Als Sorptionsmittel zur Reinigung von Pfanzenölen und -fetten werden üblicherweise naturaktive oder säurebehandelte Schichtsilicate auf der Basis von Bentoniten mit einem hohen Gehalt an Montmorillonit verwendet. Durch die Säurebehandlung mit anorganischen Säuren, wie HCl oder H₂SO₄, läßt sich die Bleichaktivität der Bentonite erheblich steigern, da einmal die zweiwertigen Zwischenschicht-Kationen durch H-Ionen ausgetauscht werden und zum anderen das Schichtsilicat zum Teil in Kieselsäure mit einer hohen Oberfläche umgewandelt wird. Die bei dieser Säurebehandlung anfallenden Abwässer, die als Hauptbestandteile Al³⁺-, Fe^{2+/3+}-, Ca²⁺- und Mg²⁺-Kationen sowie Chlorid- oder Sulfat-Anionen enthalten, stellen aus Gründen des Umweltschutzes zunehmend ein Problem dar, da ihre Beseitigung mit hohen Kosten verbunden ist und die darin enthaltenen zwei- und dreiwertigen Kationen ungenutzt bleiben.

Eine beschränkte Verwendung derartiger Abwässer ist dadurch möglich, daß man sie als Flockungsmittel bei der Aufarbeitung kommunaler Abwässer einsetzt. Weiterhin lassen sich nach Abtrennung der in den Abwässern enthaltenen Eisenionen durch Umsetzung mit Wasserglas Zeolithe herstellen (vergl. z.B. EP-A-0 092 108).

Aus der DE-B-921 445 ist ein Verfahren zur Herstellung von Bleichstoffen bekannt, das dadurch gekennzeichnet ist, daß man Aluminiumalkalialaune, die neben Kalium auch Eisen, Kobalt, Chrom, Nickel, Mangan oder andere alaunbildende Schwermetalle enthalten, in Wasser löst, die Lösung mit Silicatlösungen, z.B. mit einer Alkalisilicatlösung, niederschlägt und den von der Lösung abgetrennten Niederschlag trocknet. Als Aluminiumalkalialaune werden hierbei die reinen Salze verwendet, Hinweise über die Verwendung von salzhaltigen Abwässern finden sich nicht.

Einen ähnlichen Gegenstand betrifft die DE-B-2 036 819, wonach silicatische Adsorptions- und Trocknungsmittel mit einem Alkaligehalt von weniger als 0,1 Gew.-% und bestimmten physikalischen Eigenschaften dadurch erhalten werden, daß man aus Salzlösungen, die mindestens eines der Kationen Fe²⁺, Mg²⁺, Zn²⁺, Mn²⁺, Al³⁺ bzw. Fe³⁺ enthalten, mit Hilfe von wäßrigen Alkalisilicatlösungen homogene Fällprodukte herstellt und diese in üblicher Weise weiterverarbeitet. Zur Herstellung der Fällprodukte werden jedoch reine Salzlösungen verwendet. Hinweise auf die Verwendung von salzhaltigen sauren Abwässern fehlen.

Aus der JP-A-49 004349 ist ein Verfahren zur Abwasserklärung bekannt, bei dem dem Abwasser Reaktionsgemische aus Säuren und zeolithischen Diatomiten zugesetzt werden. Die Metallionen Al³⁺ und Fe³⁺ enthaltenden Gemische bilden im Abwasser große Flocken, wodurch die Reinigung begünstigt wird. Es fehlen Hinweise auf die Verwertung von sauren salzhaltigen Abwässern zur Gewinnung von Sorptionsmitteln.

Die EP-A 0 164 514 betrifft die Verwendung von kristallinen schichtförmigen Natriumsilicaten der Zusammensetzung NaMSiₓO₂ₓ₊₁ · y H₂O, wobei M Natrium oder Wasserstoff bedeutet und x von 1,9 bis 4 und y eine Zahl von 0 bis 20 ist, zur Enthärtung von Wasser, das Calcium- und/oder Magnesium-Ionen enthält. Die kristallinen Natriumsilicate werden durch Kristallisation von röntgenamorphen Natriumsilicat hergestellt und sollen ein besseres Calcium- bzw. Magnesiumbindevermögen haben als Zeolith A. Es finden sich keine Hinweise über die Verwertung der sauren Abwässer der Bleicherdeproduktion.

Der Erfindung liegt die Aufgabe zugrunde, die genannten Abwässer auf umweltverträgliche Weise unschädlich zu machen und dabei gleichzeitig die darin gelösten Bestandteile zu nutzen. Es wurde überraschenderweise gefunden, daß sich aus diesen Bestandteilen Sorptionsmittel mit guten Bleicheigenschaften herstellen lassen.

Gegenstand der Erfindung ist somit ein Verfahren zur umweltfreundlichen Verwertung von sauren Abwässern unter Bildung eines Sorptionsmittels, das dadurch gekennzeichnet ist, daß man ein Al³⁺-, Fe^{2+/3+}-, Ca²⁺- und Mg²⁺-Kationen und anorganische Anionen als Hauptbestandteile enthaltendes saures Abwasser der Bleicherdeproduktion mit einer Alkaliwasserglaslösung umsetzt, den erhaltenen Niederschlag von der wäßrigen Phase abtrennt und gegebenenfalls reinigt und trocknet.

Das nach dem erfindungsgemäßen Verfahren erhaltene Sorptionsmittel hat neben einer hohen spezifischen Oberfläche und einem hohen Mikroporenvolumen eine außerordentlich hohe Ionenumtauschfähigkeit. Bei der Zugabe der Wasserglaslösung werden die dreiwertigen Kationen Fe³⁺ und Al³⁺ zu über 99 % ausgefällt. Die wäßrige Phase enthält nur noch Alkali- und Erdalkalisalze (Chloride bzw. Sulfate, je nachdem, ob bei der Säurebehandlung des Schichtsilicats Salzsäure oder Schwefelsäure verwendet wurde) und kann somit umweltschonend beseitigt werden.

Es wurde überraschenderweise gefunden, daß das erfindungsgemäß hergestellte Sorptionsmittel Kokosöl etwas besser als eine säureaktivierte Bleicherde bleicht und Phospholipide aus Sojaöl deutlich besser als Kieselgel entfernt.

Vorzugsweise verwendet man ein saures Abwasser mit einem Gehalt an zweiwertigen Kationen von 0,2 bis 25 g/l, insbesondere von 0,2 bis 12 g/l und einem Gehalt an dreiwertigen Kationen von 0,1 bis 80 g/l, insbesondere von 0,2 bis 31 g/l. Im allgemeinen verwendet man ein Abwasser mit folgendem Kationengehalt:
- Ca²⁺ :: 0,2 - 25, vorzugsw. 0,2 - 5, insbes. 0,2 - 1,0 g/l
- Mg²⁺ :: 0,2 - 20, vorzugsw. 0,2 - 7, insbes. 0,2 - 1,5 g/l
- Fe^{2+/3+} :: 0,4 - 50, vorzugsw. 0,4 - 10, insbes. 0,4 - 2,0 g/l
- Al³⁺ :: 0,1 - 80, vorzugsw. 0,1 - 21, insbes. 0,1 - 4,0 g/l

Entsprechend der Herkunft des Abwassers sind die genannten Kationen an Chlorid- oder Sulfat-Anionen gebunden. Als weitere anorganische Anionen kommen z.B. Nitrat- oder Perchlorat-Anionen in Frage.

Ferner enthalten die genannten Abwässer je nach Herkunft des säurebehandelten Schichtsilicats in wechselnder Zusammensetzung die zwei- und dreiwertigen Kationen von Spurenelementen in mg-Mengen.

Liegt ein größerer Teil des enthaltenen Eisens im Abwasser in Form von Fe²⁺-Kationen vor, so können diese mit einem Oxidationsmittel, vorzugsweise einem sauerstoffhaltigen Gas, zweckmäßigerweise Luft, zu Fe³⁺-Ionen oxidiert werden. Auf diese Weise läßt sich eine praktisch quantitative Abscheidung des Eisens erzielen. Es ist aber auch möglich, die Fe²⁺-Kationen in Form von Eisen-(II)-hydroxid im Niederschlag abzuscheiden und dieses dann zu Eisen-(III)-hydroxid zu oxidieren.

Zur Ausfällung der zwei- und dreiwertigen Kationen verwendet man zweckmäßig eine Natrium-Wasserglaslösung mit einem Gewichtsverhältnis SiO₂:Na₂O von 3,25 bis 3,40. Es kann auch eine Kalium-Wasserglaslösung verwendet werden.

Die Ausfällung der zwei- und dreiwertigen Kationen wird vorzugsweise bei Temperaturen von 20 bis 100°C, vorzugsweise bei etwa 40 bis 100°C, insbesondere bei etwa 60 bis 80°C, z.B. bei 70°C, vorgenommen.

Die Fällung kann so durchgeführt werden, daß man die Alkaliwasserglaslösung unter Rühren zur Lösung der zwei- und dreiwertigen Metalle gibt, oder umgekehrt.

Das Mengenverhältnis zwischen der Abwasserlösung und der Alkaliwasserglaslösung wird vorzugsweise so eingestellt, daß das Reaktionsmedium nach der Ausfällung des Niederschlags einen pH-Wert von 5 bis 7, vorzugsweise von 6, hat. Auf diese Weise kann also eine praktisch neutrale Alkalisalzlösung in den Vorfluter geleitet werden, was aus Gründen des Umweltschutzes erwünscht ist.

Der abgetrennte Niederschlag, der im wesentlichen ein Gemisch aus hauptsächlich den Silicaten und untergeordnet den Hydroxiden der zwei- und dreiwertigen Metalle sowie Kieselsäure darstellt, wird vorzugsweise durch Auswaschen gereinigt und bei Temperaturen von weniger als 300°C, vorzugsweise von etwa 50 bis 150°C, insbesondere bei 80°C, bis auf einen Wassergehalt von etwa 4 bis 50 Gew.-% getrocknet.

Gegenstand der Erfindung ist ferner ein Sorptionsmittel, das nach dem vorstehend beschriebenen Verfahren herstellbar ist und das eine spezifische Oberfläche von 100 bis 600 m²/g, vorzugsweise von 200 bis 500 m²/g, ein Mikroporenvolumen von
0 bis 14 nm: 0,2 bis 0,7 ml/g
0 bis 25 nm: 0,2 bis 0,8 ml/g
0 bis 80 nm: 0,2 bis 0,9 ml/g; und
eine Ionenumtauschfähigkeit (IUF) von 20 bis 190, vorzugsweise von 130 bis 170 mVal/100g hat.

Die vorstehend angegebenen Parameter werden an einem nach DIN/ISO-787/2 über einen Zeitraum von 2 Stunden bei 150°C getrocknetem Material bestimmt, um eine konstante Ausgangsbasis zu schaffen. Die Ausgangsmaterialien und das Endprodukt können aber, wie nachstehend angegeben ist, auch andere Wassergehalte haben.

Die spezifische Oberfläche wird an dem wie vorstehend getrockneten Material nach der BET-Methode (Einpunktmethode mit Stickstoff gemäß DIN 66 131) ermittelt.

Das Mikroporenvolumen wird nach der CCl₄-Methode bestimmt (H.A. Benesi, R.V. Bonnar, C.F. Lee, Anal. Chem. 27. 1963 (1955)). Hierbei wird nur das Volumen der Poren in den Körnern, nicht aber das Zwischenkornvolumen, bestimmt.

Die Ionenumtauschfähigkeit (IUF) wird wie folgt ermittelt:

Das wie vorstehend getrocknete Sorptionsmittel wird mit einem großen Überschuß an wäßriger NH₄Cl-Lösung 1 Stunde unter Rückfluß zur Reaktion gebracht. Nach einer Standzeit von 16 Stunden bei Raumtemperatur wird filtriert, der Filterkuchen wird gewaschen, getrocknet und gemahlen, und der NH₄-Gehalt im Sorptionsmittel wird nach Kjeldahl bestimmt.

Gegenstand der Erfindung ist ferner die Verwendung des vorstehend angegebenen Sorptionsmittels zur Entfärbung von Ölen und insbesondere zur Entfernung von Seifen, Phospholipiden und Metallionen aus Ölen, insbesondere aus Pflanzenöl.

Soll das Sorptionsmittel zur Entfärbung von Ölen eingesetzt werden, so beträgt sein Wassergehalt vorzugsweise etwa 5 bis 15 Gew.-%, insbesondere etwa 6 bis 8 Gew.-%.

Soll das Sorptionsmittel zur Entfernung von Seifen, Phospholipiden und Metallionen eingesetzt werden, so beträgt sein Wassergehalt vorzugsweise etwa 30 bis 50 Gew.-%, insbesondere etwa 35 bis 45 Gew.-%.

Die Erfindung ist durch die nachstehenden Beispiele erläutert.

### Beispiel 1

150 g Natriumwasserglas (37/40° Be, 26,2 % SiO₂) werden mit 1500 ml Wasser verdünnt. Unter Rühren tropft man bei einer Temperatur von 70°C, ein saures Bleicherdeabwasser enthaltend 1,7 g/l Fe^{2+/3+}, 3,45 g/l Al³⁺, 0,59 g/l Ca²⁺, 1,17 g/l Mg²⁺ sowie verschiedene mehrwertige Spurenelemente und Alkali-Ionen in Form der Chloride (Dichte 1,1 g/ml) bis zu einem pH-Wert von 6 zu. Zur Verbesserung der Filtrationseigenschaften des entstandenen Niederschlages beläßt man das Reaktionsmedium noch weitere 15 Minuten unter den genannten Reaktionsbedingungen. Das Produkt wird filtriert, mit Wasser gewaschen und bei 80°C auf einen Wassergehalt von 7 % getrocknet.

Die spezifische Oberfläche, das Mikroporenvolumen und die Ionenumtauschfähigkeit des (nach DIN/ISO 787/2) getrocknetem Sorptionsmittels sind in Tabelle 1 im Vergleich mit einigen bekannten Sorptionsmitteln (säurebehandelte hochaktive Bleicherde, naturaktive Bleicherde, Kieselgel) angegeben. Auch die Parameter der bekannten Sorptionsmittel wurden an den nach DIN/ISO 787/2 getrockneten Materialien bestimmt.

**Tabelle 1**

| Eigenschaften | Sorptionsmittel nach Beispiel 1 | säurebehand. hochaktive Bleicherde* | naturakt. Bleicherde** | Kieselgel*** |
|---|---|---|---|---|
| Spezif. Oberfläche (m²/g) | 365 | 250 | 81 | 483 |

| Mikroporenvolumen (ml/g) | | | | |
|---|---|---|---|---|
| 0-14 nm | 0,516 | 0,276 | 0,075 | 0,763 |
| 0-25 nm | 0,617 | 0,334 | 0,104 | 0,822 |
| 0-80 nm | 0,658 | 0,391 | 0,137 | 0,912 |
| IUF (mVal/100g) | 139 | 36 | 76 | 1,4 |

| | | | | |
|---|---|---|---|---|
| *Handelsbezeichnung TONSIL® Optimum FF - Süd-Chemie AG; SiO₂-Gehalt 74 %, Wassergehalt 7 %. | | | | |
| **Handelsprodukt Terrana® D - Süd-Chemie AG; Wassergehalt 7 % | | | | |
| ***SiO₂-Gehalt des trockenen Materials: >99 %, H₂O-Gehalt 60%. | | | | |

Wie die Werte von Tabelle 1 zeigen, sind im Vergleich zu der säurebehandelten Bleicherde die spezifische Oberfläche sowie die Werte für die drei Bereiche des Mikroporenvolumens bei dem erfindungsgemäßen Sorptionsmittel deutlich höher. Überraschenderweise wurde auch eine sehr hohe IUF gefunden, was den Unterschied des erfindungsgemäß hergestellten Sorptionsmittels gegenüber dem Kieselgel unterstreicht.

Die Analyse des hinterbleibenden Abwassers ergab, daß die dreiwertigen Kationen zu über 99 % entfernt worden waren.

### Beispiel 2

100 ml saures Abwasser der Bleicherdeproduktion, enthaltend 0,68 g/l Fe^{2+/3+}, 1,38 g/l Al³⁺, 0,24 g/l Ca²⁺, 0,47 g/l Mg²⁺ sowie verschiedene mehrwertige Spurenelemente (Dichte; 1,1) werden mit 1500 ml Wasser verdünnt. Unter Rühren tropft man bei 70°C eine Natriumwasserglaslösung mit einem SiO₂-Gehalt von 26,2 % zu, bis ein pH-Wert von 6 erreicht ist. Zur Verbesserung der Filtrationseigenschaften des Niederschlages beläßt man das Reaktionsgemisch weitere 15 Minuten unter den genannten Bedingungen. Das Produkt wird nach dem Abfiltrieren mit Wasser gewaschen und bei 80°C auf einen Wassergehalt von 4 % getrocknet.

In der nachstehenden Tabelle 2 sind die Konzentrationen für die einzelnen Kationen im Abwasser von Beispiel 2 vor und nach der Behandlung mit Wasserglas angegeben.

**Tabelle 2**

| Kationen | Konzentration (mg/l) | | Kationen | Konzentration (mg/l) | |
|---|---|---|---|---|---|
| | vorh. | nachh. | | vorh. | nachh. |
| | | | Cu²⁺ | 0,31 | 0,03 |
| Fe^{2+/3+} | 680 | 0,12 | Zn²⁺ | 2,30 | 0,03 |
| Al³⁺ | 1380 | 4,9 | Ni²⁺ | 0,40 | 0,02 |
| Ca²⁺ | 235 | 86 | Co²⁺ | 0,12 | 0,08 |
| Mg²⁺ | 468 | 151 | Cr³⁺ | 0,41 | 0,003 |
| Na⁺ | 3,7 | 4700 | Pb²⁺ | 0,52 | 0,007 |
| K⁺ | 46 | 20 | Cd²⁺ | 0,002 | 0,002 |
| | | | Hg²⁺ | <0,001 | <0,001 |
| | | | As ges. | 0,029 | 0,002 |

Wie Tabelle 3 zeigt, wird ein Sorptionsmittel mit hoher spezifischer Oberfläche, einem hohen Mikroporenvolumen und überraschenderweise einer ungewöhnlich hohen IUF erhalten.

**Tabelle 3**

| | |
|---|---|
| Spezifische Oberfläche | 437 m²/g |

| Mikroporenvolumen | |
|---|---|
| 0 - 14 nm | 0,383 ml/g |
| 0 - 25 nm | 0,443 ml/g |
| 0 - 80 nm | 0,473 ml/g |
| IUF | 148 mVal/g |

Die bei der Herstellung des Sorptionsmittels anfallenden Abwässer enthalten weniger als 1 % der ursprünglich vorhandenen dreiwertigen Kationen. Die Konzentrationen an Schwermetall-Kationen entsprachen den in Tabelle 2 angegebenen Werten.

### Anwendungsbeispiel 1

Das Sorptionsmittel nach Beispiel 1 wurde an Kokosnußöl auf seine Bleichwirkung hin überprüft. Die Bleichwirkung wurde nach der "Lovibond-Colourscan"-Methode bestimmt. Zum Vergleich wurden zwei säureaktivierte Bleicherden, nämlich die Produkte TONSIL® ACC FF (Handelsprodukt der Süd-Chemie AG, spezifische Oberfläche 222 m²/g, IUF 39 mVal/100g, Wassergehalt 7 %) und Fulmont® XX (Handelsprodukt von Laporte, SiO₂-Gehalt 60 %, BET-Oberfläche 300 m²/g, Wassergehalt 8 %) sowie das Kieselgel von Tabelle 1 herangezogen. Wie Tabelle 4 verdeutlicht, zeigt das erfindungsgemäße Sorptionsmittel eine merklich bessere Bleichwirkung (rot) als das Kieselgel und überraschenderweise auch eine etwas bessere Bleichwirkung als die beiden säurebehandelten Bleicherden.

**Tabelle 4**

| Bleichung von Kokosnußöl | | | | | | |
|---|---|---|---|---|---|---|
| Substanz | Bleicherde (%) | T (°C) | t (min.) | p (mbar) | Lovibond-Farbzahl 5 1/4"-Küvette | |
| | | | | | rot | gelb |
| ungebleicht | - | - | - | - | 11,5 | 68 |
| Sorptionsmittel gem. Beispiel 1 | 1,5 | 90 | 30 | 40 | 3,4 | 22,5 |
| TONSIL ACC FF | 1,5 | 90 | 30 | 40 | 3,6 | 21 |
| Fulmont XX | 1,5 | 90 | 30 | 40 | 3,6 | 20,5 |
| Kieselgel | 1,5 | 90 | 30 | 40 | 4,1 | 25,0 |

### Anwendungsbeispiel 2

### Phospholipidadsorption

Um die Kapazität des nach Beispiel 1 hergestellten Sorptionsmittels für die Aufnahme von Phospholipiden zu überprüfen, wurde vorentschleimtes, ungetrocknetes Sojaöl damit behandelt, wobei das Sorptionsmittel das Wasser aus dem Öl aufnahm, so daß es schließlich einen Wassergehalt von etwa 45 Gew.-% hatte. Als Vergleichssubstanzen wurden eine säureaktivierte Bleicherde (TONSIL Optimum FF; Tabelle 1), eine naturaktive Bleicherde (Terrana D; Tabelle 1) sowie ein Kieselgel (Tabelle 1) verwendet. Das erfindungsgemäße Sorptionsmittel hat gemäß den in Tabelle 5 angegebenen Ergebnissen ein sehr viel höheres Bindevermögen für Phospholipide als die Bleicherden und zeigt bemerkenswerterweise auch ein deutlich besseres Adsorptionsverhalten als das Kieselgel.

**Tabelle 5**

| Substanz | Bleicherde (%) | T (°C) | t (min.) | p (mbar) | P (ppm) | relative Kapazität für P (%) |
|---|---|---|---|---|---|---|
| unbehand. | | - | - | - | 26 | - |
| Sorptionsmittel gem. Beispiel 1 | 0,5 | 90 | 30 | 20 | 12 | 100 |
| Tonsil® Optimum FF | 0,5 | 90 | 30 | 20 | 20 | 78 |
| Terrana®D | 0,5 | 90 | 30 | 20 | 20 | 43 |
| Kieselgel | 0,5 | 90 | 30 | 20 | 16 | 71 |

## Patentansprüche

1. Verfahren zur umweltfreundlichen Verwertung von sauren Abwässern unter Bildung eines Sorptionsmittels, dadurch gekennzeichnet, daß man ein Al³⁺-, Fe^{2+/3+}-, Ca²⁺- und Mg²⁺-Kationen und anorganische Anionen als Hauptbestandteile enthaltendes saures Abwasser der Bleicherdeproduktion mit einer Alkaliwasserglaslösung umsetzt, den erhaltenen Niederschlag von der wäßrigen Phase abtrennt und gegebenenfalls reinigt und trocknet.

2. Verfahren nach Anspruch 1, dadurch gekennzeichnet, daß man ein saures Abwasser mit einem Gehalt an zweiwertigen Kationen von 0,2 bis 25 g/l, vorzugsweise von 0,4 bis 12 g/l, und einem Gehalt an dreiwertigen Kationen von 0,1 bis 80 g/l, vorzugsweise von 0,2 bis 31 g/l verwendet.

3. Verfahren nach Anspruch 1 oder 2, dadurch gekennzeichnet, daß man ein Abwasser mit folgendem Kationengehalt verwendet:
Ca²⁺ : 0,2 - 25, vorzugsw. 0,2 - 5, insbes. 0,2 - 1,0 g/l
Mg²⁺ : 0,2 - 20, vorzugsw. 0,2 - 7, insbes. 0,2 - 1,5 g/l
Fe^{2+/3+} : 0,4 - 50, vorzugsw. 0,4 - 10, insbes. 0,4 - 2,0 g/l
Al³⁺ : 0,1 - 80, vorzugsw. 0,1 - 21, insbes. 0,1 - 4,0 g/l

4. Verfahren nach einem der Ansprüche 1 bis 3, dadurch gekennzeichnet, daß man die Fe²⁺-Kationen mit einem Oxidationsmittel, vorzugsweise einem sauerstoffhaltigen Gas, zu Fe³⁺-Kationen oxidiert.

5. Verfahren nach einem der Ansprüche 1 bis 4, dadurch gekennzeichnet, daß man zur Ausfällung der zwei- und dreiwertigen Kationen eine Natriumwasserglaslösung mit einem Gewichtsverhältnis SiO₂:Na₂O von 3,25 bis 3,40 verwendet.

6. Verfahren nach einem der Ansprüche 1 bis 5, dadurch gekennzeichnet, daß man die Ausfällung der zwei- und dreiwertigen Kationen bei Temperaturen von etwa 20 bis 100°C, vorzugsweise bei etwa 40 bis 100°C, insbesondere bei etwa 60 bis 80°C, vornimmt.

7. Verfahren nach einem der Ansprüche 1 bis 6, dadurch gekennzeichnet, daß man zur Fällung die Alkaliwasserglaslösung unter Rühren zur Lösung der zwei- und dreiwertigen Metalle gibt, oder umgekehrt.

8. Verfahren nach einem der Ansprüche 1 bis 7, dadurch gekennzeichnet, daß man das Mengenverhältnis zwischen der Abwasserlösung und der Alkaliwasserglaslösung so einstellt, daß das Reaktionsmedium nach der Ausfällung des Niederschlags einen pH-Wert von 5 bis 7, vorzugsweise von 6, hat.

9. Verfahren nach einem der Ansprüche 1 bis 8, dadurch gekennzeichnet, daß man den abgetrennten Niederschlag durch Auswaschen reinigt und bei Temperaturen von weniger als 300°C, vorzugsweise von etwa 50 bis 150°C, insbesondere bei 80°C, bis auf einen Wassergehalt von etwa 4 bis 50 Gew.-% trocknet.

10. Sorptionsmittel, das nach dem Verfahren nach einem der Ansprüche 1 bis 9 herstellbar ist und das
(a) eine spezifische Oberfläche von 100 bis 600 m²/g, vorzugsweise von 200 bis 500 m²/g;
(b) ein Mikroporenvolumen von
0 bis 14 nm: 0,2 bis 0,7 ml/g
0 bis 25 nm: 0,2 bis 0,8 ml/g
0 bis 80 nm: 0,2 bis 0,9 ml/g; und
(c) eine Ionenumtauschfähigkeit (IUF) von 20 bis 190, vorzugsweise von 130 bis 170 mVal/100g hat.

11. Sorptionsmittel nach Anspruch 10, gekennzeichnet durch einen Wassergehalt von 5 bis 15 Gew.-%, vorzugsweise von 6 bis 8 Gew.-%.

12. Sorptionsmittel nach Anspruch 10, gekennzeichnet durch einen Wassergehalt von etwa 30 bis 50 Gew.-%, vorzugsweise von etwa 35 bis 45 Gew.-%.

13. Verwendung des Sorptionsmittels nach einem der Ansprüche 10 bis 12 zur Entfärbung von Ölen und zur Entfernung von Seifen, Phospholipiden und Metallionen aus Ölen, insbesondere Pflanzenölen.

## Claims

1. A method for the non-polluting utilisation of acid waste water to form a sorption agent, characterised in that an acid waste water from bleaching earth production, which contains Al³⁺, Fe^{2+/3+}, Ca²⁺ and Mg²⁺ cations and inorganic anions as the main constituents, is reacted with an alkali water glass solution, the precipitate obtained is separated from the aqueous phase and is, optionally, purified and dried.

2. A method according to Claim 1, characterised in that an acid waste water is used having a content of divalent cations of 0.2 to 25 g/l, preferably of 0.4 to 12 g/l, and a content of trivalent cations of 0.1 to 80 g/l, preferably of 0.2 to 31 g/l.

3. A method according to Claim 1 or 2, characterised in that a waste water with the following cation content is used:
Ca²⁺ : 0.2 - 25, prefer. 0.2 - 5, in partic. 0.2 - 1.0 g/l
Mg²⁺ : 0.2 - 20, prefer. 0.2 - 7, in partic. 0.2 - 1.5 g/l
Fe^{2+/3+} : 0.4 - 50, prefer. 0.4 - 10, in part. 0.4 - 2.0 g/l
Al³⁺ : 0.1 - 80, prefer. 0.1 - 21, in part. 0.1 - 4.0 g/l

4. A method according to any one of Claims 1 to 3, characterised in that the Fe²⁺ cations are oxidised to form Fe³⁺ cations with an oxidant, preferably a gas containing oxygen.

5. A method according to any one of Claims 1 to 4, characterised in that a sodium water glass solution with a weight ratio SiO₂:Na₂O of 3.25 to 3.40 is used to precipitate the divalent and trivalent cations.

6. A method according to any one of Claims 1 to 5, characterised in that the precipitation of the divalent and trivalent cations is carried out at temperatures of approximately 20 to 100°C, preferably at approximately 40 to 100°C, in particular at approximately 60 to 80°C.

7. A method according to any one of Claims 1 to 6, characterised in that to effect precipitation the alkali water glass solution is added while stirring to the solution of divalent and trivalent metals, or vice versa.

8. A method according to any one of Claims 1 to 7, characterised in that the relative proportion between the waste water solution and the alkali water glass solution is adjusted so that, after precipitation of the precipitate, the reaction medium has a pH value of 5 to 7, preferably 6.

9. A method according to any one of Claims 1 to 8, characterised in that the separated precipitate is purified by washing and is dried at temperatures of less than 300°C, preferably of approximately 50 to 150°C, in particular at 80°C, to a water content of approximately 4 to 50 % by weight.

10. A sorption agent which can be prepared in accordance with the method according to any one of Claims 1 to 9 and which has
(a) a specific surface area of 100 to 600 m²/g, preferably of 200 to 500 m²/g;
(b) a micropore volume of
0 to 14 nm: 0.2 to 0.7 ml/g
0 to 25 nm: 0.2 to 0.8 ml/g
0 to 80 nm: 0.2 to 0.9 ml/g, and
(c) an ion-exchange capacity (IEC) of 20 to 190, preferably of 130 to 170 mVal/100 g.

11. A sorption agent according to Claim 10, characterised by a water content of 5 to 15 % by weight, preferably 6 to 8 % by weight.

12. A sorption agent according to Claim 10, characterised by a water content of 30 to 50 % by weight, preferably of approximately 35 to 45% by weight.

13. Use of the sorption agent according to any one of Claims 10 to 12 for decolorising oils and for removing soaps, phospholipids and metal ions from oils, in particular vegetable oils.

## Revendications

1. Procédé d'utilisation non polluante d'eaux usées acides moyennant la formation d'un milieu de sorption caractérisé en ce que l'on convertit des eaux usées acides, contenant comme constituants principaux des cations Al³⁺⁻, Fe^{2+/3+-}, Ca²⁺⁻ et Mg^{2+ -} et des anions minéraux, lors de la production d'argile décolorante en une solution de verre soluble à l'alcali, on sépare le dépôt obtenu par rapport à la phase aqueuse et éventuellement on le nettoie et on le sèche.

2. Procédé selon la revendication 1, caractérisé en ce qu'on utilise des eaux usées acides possédant une teneur en cations bivalents comprise entre 0,2 et 25 g/l et de préférence entre 0,4 et 12 g/l, et une teneur en cations trivalents comprise entre 0,1 et 80 g/l et de préférence entre 0,2 et 31 g/l.

3. Procédé selon la revendication 1 ou 2, caractérisé en ce qu'on utilise des eaux usées ayant la teneur en cations indiquée ci-après :
Ca²⁺ : 0,2 - 25, de préférence 0,2 - 5, notamment 0,2 - 1,0 g/l
Mg²⁺ : 0,2 - 20, de préférence 0,2 - 7, notamment 0,2 - 1,5 g/l
Fe^{2+/3+} : 0,4 - 50, de préférence 0,4 - 10, notamment 0,4 - 2,0 g/l
Al³⁺ : 0,1 - 80, de préférence, 0,1 - 21, notamment 0,1 - 4,0 g/l.

4. Procédé selon l'une des revendications 1 à 3, caractérisé en ce qu'on oxyde les cations Fe²⁺⁻ à l'aide d'un agent oxydant, de préférence un gaz contenant de l'oxygène, en cations Fe³⁺⁻.

5. Procédé selon l'une des revendications 1 à 4, caractérisé en ce que pour faire précipiter les cations divalents et trivalents, on utilise une solution de verre soluble au sodium possédant un rapport pondéral SiO₂:Na₂O compris entre 3,25 et 3,40.

6. Procédé selon l'une des revendications 1 à 5, caractérisé en ce qu'on fait précipiter les cations divalents et trivalents à des températures comprises entre environ 20 et 100°C et de préférence entre environ 40 et 100°C et notamment entre environ 60 et 80°C.

7. Procédé selon l'une des revendications 1 à 6, caractérisé en ce que, pour la précipitation, on applique la solution de verre soluble à l'alcali tout en l'agitant pour dissoudre les métaux divalents et trivalents ou inversement.

8. Procédé selon l'une des revendications 1 à 7, caractérisé en ce qu'on règle le rapport quantitatif entre la solution des eaux usées et la solution du verre soluble à l'alcali de manière qu'après la précipitation du dépôt, le milieu réactionnel possède un pH d'une valeur de 5 à 7 de préférence 6.

9. Procédé selon l'une des revendications 1 à 8, caractérisé en ce qu'on nettoie par lavage le dépôt séparé et qu'à des températures inférieures à 300°C et de préférence comprises entre environ 50 et 150°C et notamment à 80°C, on exécute un séchage jusqu'à obtenir une teneur en eau d'environ 4 à 50% en poids.

10. Milieu de sorption, qui peut être formé selon le procédé conforme à l'une des revendications 1 à 9, et qui possède
(a) une surface spécifique de 100 à 600 m²/g, de préférence de 200 à 500 m²/g;
(b) un volume de micropores allant
de 0 à 14 nm : 0,2 à 0,7 ml/g
de 0 à 25 nm : 0,2 à 0,8 ml/g
de 0 à 80 nm : 0,2 à 0,9 ml/g; et
(c) une capacité d'échange d'ions (IUF) comprise entre 20 et 190 et de préférence entre 130 et 170 mVal/100g.

11. Milieu de sorption selon la revendication 10, caractérisé par une teneur en eau de 5 à 15% en poids et de préférence de 6 à 8% en poids.

12. Milieu de sorption selon la revendication 10, caractérisé par une teneur en eau d'environ 30 à 50% en poids et de préférence d'environ 35 à 45% en poids.

13. Utilisation du milieu de sorption selon l'une des revendications 10 à 12 pour décolorer des huiles et éliminer des savons, des phospholipides et des ions métalliques à partir d'huiles, notamment d'huiles végétales.
